# EUROPEAN PATENT APPLICATION

(11) **EP 4 624 370 A1**
(43) Date of publication of application: **01.10.2025**
(21) Application number: 24167457.1
(22) Date of filing: 28.03.2024
(51) Int. Cl.: B65G 1/04

(54) **AN AUTOMATED STORAGE AND RETRIEVAL SYSTEM**

(71) Applicant: AUTOSTORE TECHNOLOGY AS, 5578 Nedre Vats (NO)
(72) Inventor: MYRMO, Øystein, 5578 Nedre Vats (NO)
(74) Representative: Kilburn & Strode LLP

(57) **Abstract**

The disclosure relates to an automated storage and retrieval system comprising a storage structure comprising a plurality of vertical columns of stacked storage containers, wherein each the storage containers each comprise a hexagonal base. The system also comprises a plurality of container-handling vehicles configured to store and retrieve the storage containers into and out of the storage structure. The disclosure also relates storage containers, container-handling vehicles, and methods for controlling the same in the automated storage and retrieval system.

## Description

### TECHNICAL FIELD

The disclosure relates to an automated storage and retrieval system. More particularly, it relates to an automatic storage and retrieval system using hexagonal storage containers, storage containers for use therein, vehicles for handling such storage containers, and methods for the same.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 3D is a perspective below view of the robot of Fig. 3B;
Fig. 4 shows a computing device for implementing the operations described herein;
Fig. 5A shows a perspective view of a storage structure for an automated storage and retrieval system;
Fig. 5B shows a perspective view of a storage structure for an automated storage and retrieval system including a rail system;
Fig. 6 shows a perspective view of two storage containers for use in an automated storage and retrieval system;
Fig. 7 shows a top view of the storage structure of Fig. 5A or Fig. 5B including robotic container-handling vehicles;
Fig. 8A shows a perspective view of a first robotic container-handling vehicle suitable for use with the storage structure of Fig. 5B;
Fig. 8B shows a perspective view of a second robotic container-handling vehicle suitable for use with the storage structure of Fig. 5B;
Fig. 8C shows a top view of a body of the first or second robotic container-handling vehicles of Fig. 8A or Fig. 8B;
Fig. 9 shows a flow diagram of a method of handling storage containers in an automated storage and retrieval system.

### DETAILED DESCRIPTION

In overview, the disclosure relates to an automated storage and retrieval system comprising using hexagonal storage containers (also referred to as bins). Hexagonal storage containers have a hexagonal base which provides the storage containers with a dense packing configuration, because the storage containers tesselate without wasted space between them. This packing configuration provides a large ratio of storage area (and corresponding storage volume inside the storage containers) to the amount material used to construct the storage container. The hexagonal shape also provides an increased strength and robustness to the storage containers compared to other shapes, allowing for higher stacks of storage containers, or greater storage weight per bin, and correspondingly a greater utilisation of a space (e.g. a warehouse) in which the automated storage and retrieval system occupies. The hexagonal pattern can also apply to a rail system on above stacks of hexagonal storage containers, which is more resilient to lateral forces as each vertex between hexagons creates a 120 degree angle between rails. These vertices are less prone to buckling or warping than 90 degree vertices because a force along one rail is braced by the other two rails. A rail system with a hexagonal pattern also provides a shorter travel distance required to traverse between two locations compared to a rectilinear rail system. Corresponding hexagonal container-handling vehicles for traversing the rail system are more stable than equivalent rectangular vehicles and therefore can achieve greater acceleration and deceleration for a given load weight.

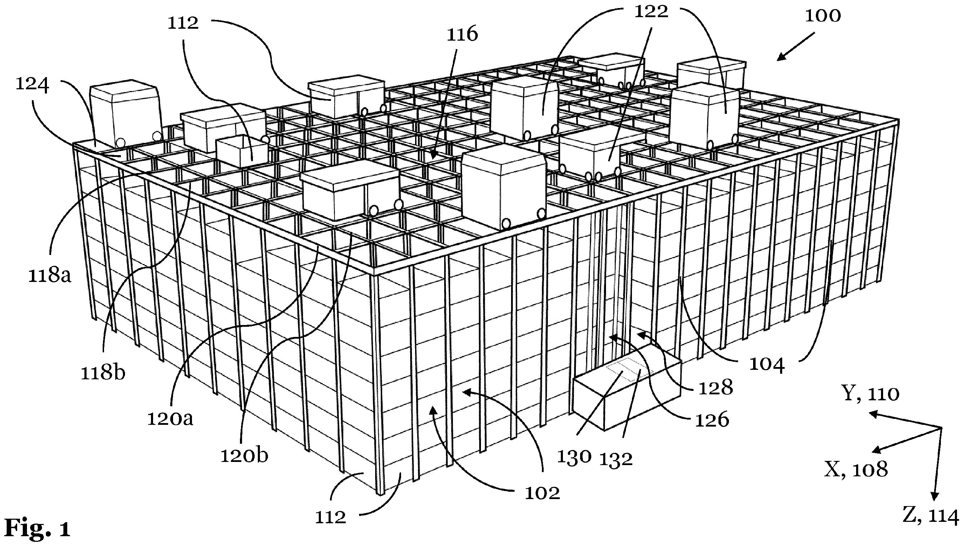

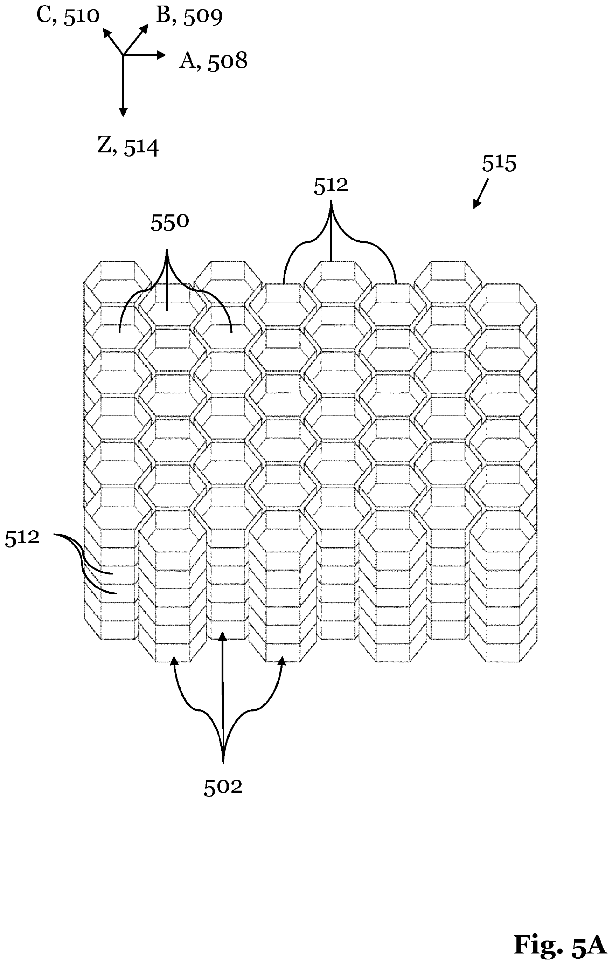

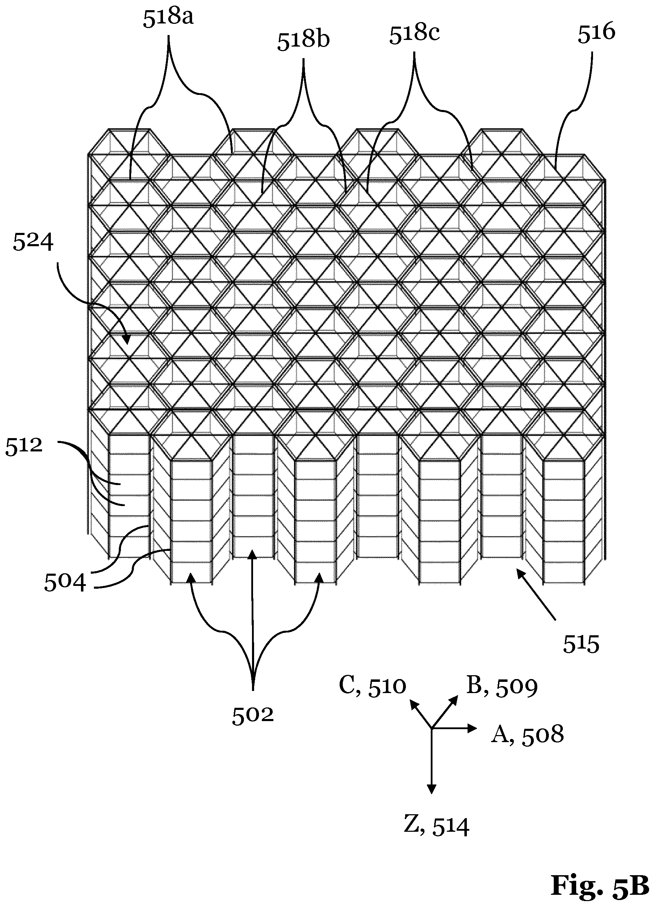

In the following description with reference to Fig. 1 to Fig. 4, embodiments of an automated storage and retrieval system having a rectilinear arrangement will first be described. These have various features in common with, and are useful for understanding, automated storage and retrieval systems using hexagonal storage containers as defined by the appended claims. Automated storage and retrieval systems comprising using hexagonal storage containers, components thereof, and related methods, are then described with reference to Fig. 5 to Fig. 9. In general, the automated storage and retrieval systems comprising hexagonal storage containers can be implemented using the same or analogous principles as a rectilinear system, with modifications to account for the different shape of the storage containers therein, such differently shaped container-handling vehicles and/or rail systems.

### Automated storage and retrieval system overview

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape, and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts, or robots.

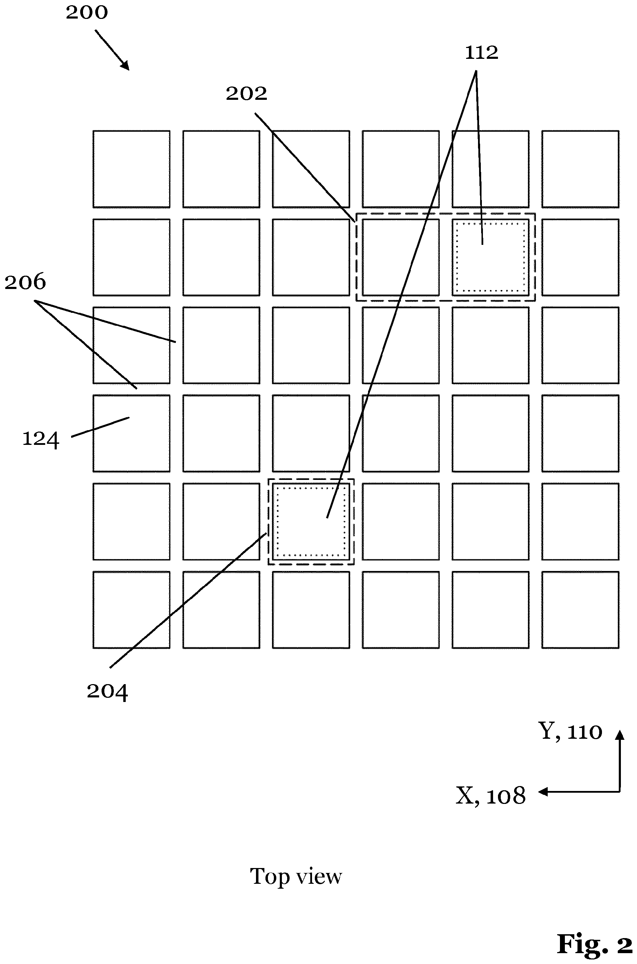

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

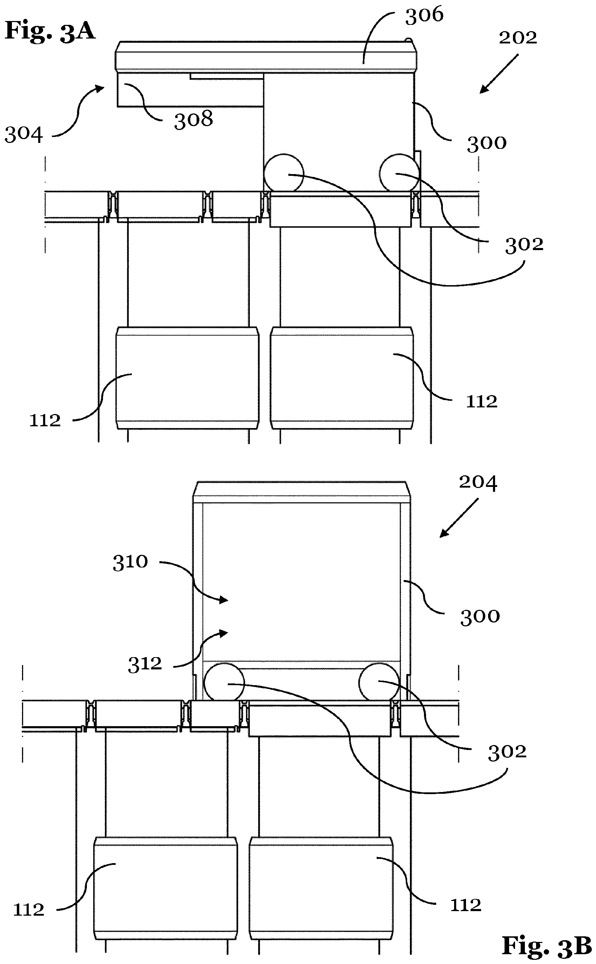

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

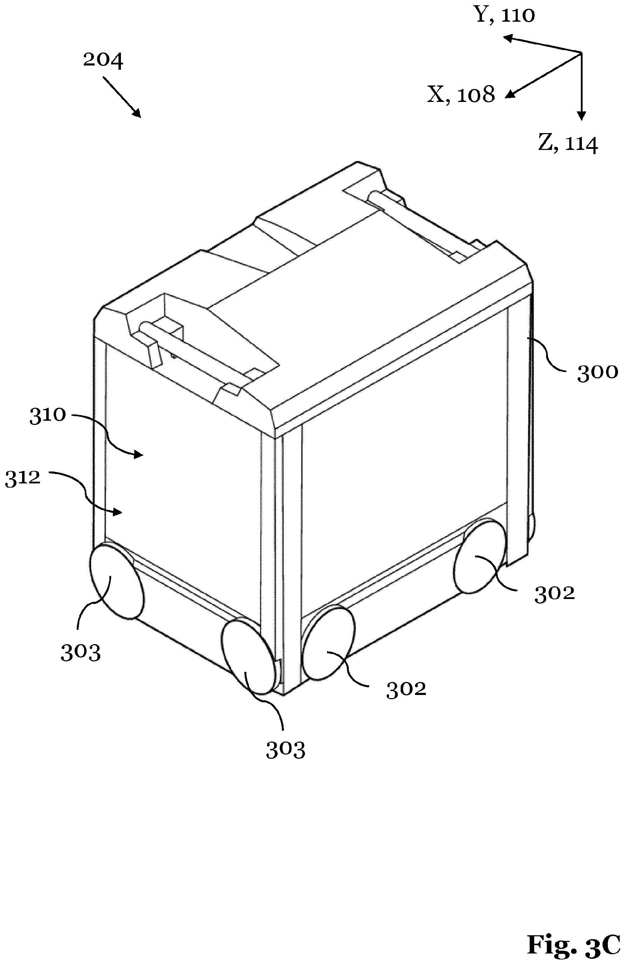

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

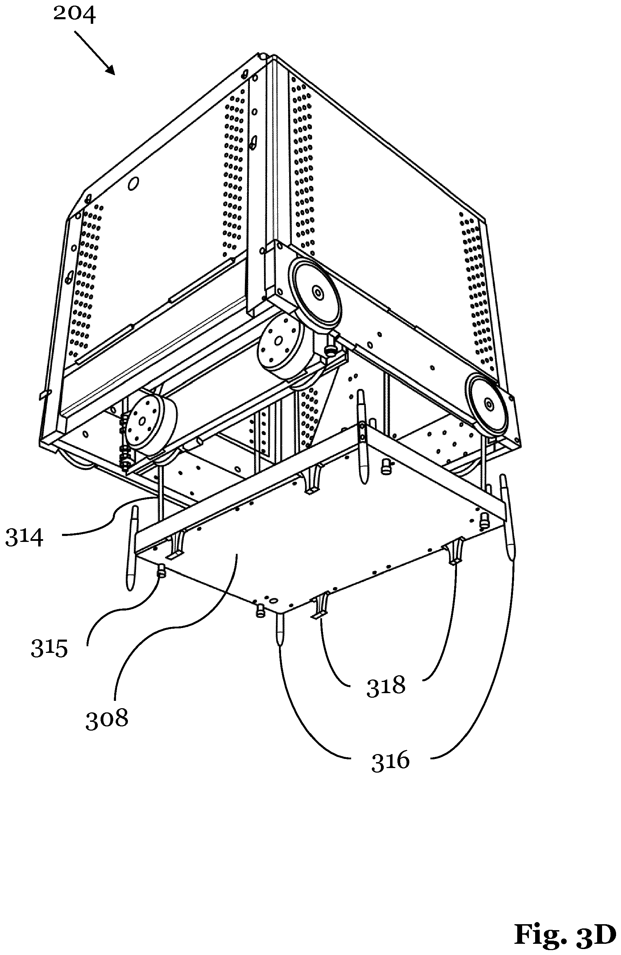

Fig. 3D shows a perspective below view of the robot of Fig. 3B in which the gripping device 308 is partially lowered from inside the internal cavity. The gripping device 308 is suspended from the internal cavity by bands 314, e.g. by passing through holes in the gripping device and fitted with stoppers 315 on the underside of the gripping device. The gripping device 308 has guide rods 316 at its corners for sliding into corresponding guide slots on a storage container. The gripping device 308 has grippers 318 for engaging a storage container and gripping onto the storage container so that, when the gripping device 308 is raised back into the internal cavity, the storage container is also lifted above the rails and into the internal cavity. The grippers 318 may have an actuator mechanism, e.g. either mechanical or electrical, that selectively moves the grippers between a grip configuration, in which the grippers 318 grip the storage container, and a release configuration, in which the grippers can freely disengage the storage container.

### Control and monitoring system

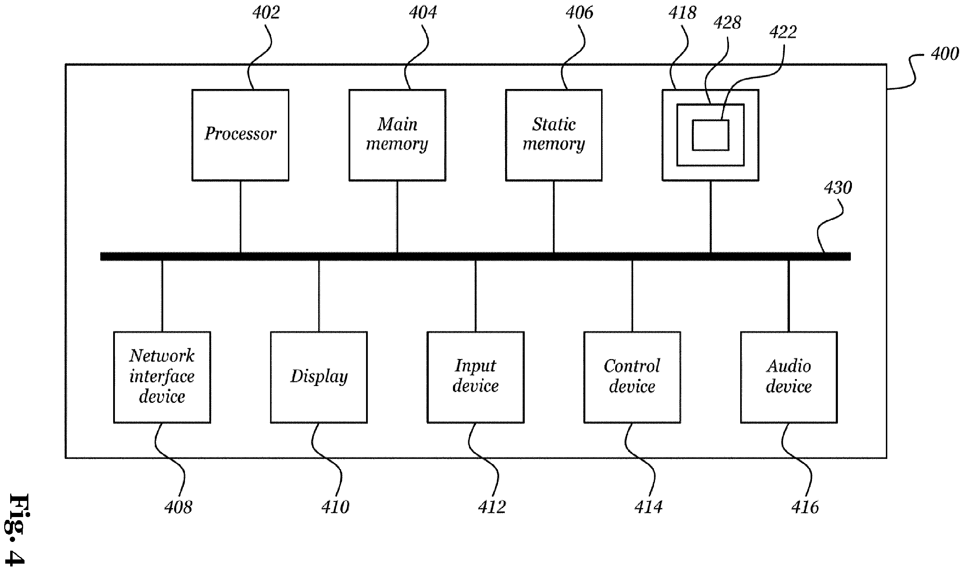

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which maybe marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips, and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Hexagonal automated storage and retrieval system

In contrast to the rectilinear automated storage and retrieval system as described above with reference to Fig. 1 to Fig. 4, a hexagon-based automated storage retrieval system, with reference to Fig. 5A, comprises a storage structure 515 (also referred to herein as a grid) arranged in a hexagonal configuration. The storage structure 515 comprises a plurality of vertical columns 502 extending across a 2D plane. The directions between each pair of adjacent vertical columns 502 is one of a first direction A, 508, a second direction B, 509, and a third direction C, 510. Storage containers or bins 512 are stacked on top of each other, preferably in a self-supporting manner, in the Z direction 514 in the columns 502, forming a storage volume of storage cells for respective bins 512 extending in 3D space. Each bin 512 comprises a hexagonal base and the vertical columns 502 tesselate across the 2D plane. This is also referred to as a hexagonal stacking configuration or a hexagonal grid. The hexagonal bins 512 each define a storage cavity 550 for receiving items to be stored. The shape of the hexagonal base is the same for all of the storage containers, i.e. regular hexagons having the same dimensions and side lengths, so that any bin 512 can be stacked on any other bin 512 and the bins 512 tesselate across the 2D plane. In some implementations, the bins 512 may comprise bins of different height to accommodate different items to be stored therein.

In addition to a storage structure 515, an automated storage retrieval system comprises a plurality of container-handling vehicles. Container-handling vehicles, or robots, which can be of a range of size, shape and function, are provided and configured to traverse the storage structure 515 to transport bins 512 in the A, B, and C directions 508, 509, 510. The robots are additionally configured to lift and lower bins 512 from/into the columns 502 in the Z direction 514. There are a variety of ways that vehicles can be configured to traverse the storage structure 515 to get to a location for accessing the target bin 512 and transport it as needed. The vehicles may traverse the storage structure 515 on rail system, such as described below with reference to Fig. 5B. In some examples, the vehicles traverse the storage structure 515 using a continuous track propulsion mechanism, i.e. having a band running around the outside of at least two wheels and driven by the wheels, so that the vehicle can travel over the highest layer of bins 512 on the bands without falling into the bins 512 but are not constrained to follow any particular route or rail system. In some examples, the vehicles traverse the storage structure 515 with a walking motion, stepping across the middle of the bins 512 and supported on the edges of bins 512. In some examples, the vehicles traverse the storage structure 515 without being supported by the storage structure 515 itself, e.g. by being suspended above the storage structure by a gantry or rails or by being self-powered aerial vehicles. In any given automated storage and retrieval system, a combination of the above types of container-handling vehicle may be used.

With reference to Fig. 5B, in some arrangements the vertical columns 502 are formed between vertical frame members 504. A rail system or network 516 is formed on top of the storage structure 515. The rail system 516 comprises (first, second, and third) sets of a vehicle rails or tracks 518a, 518b and 518c, respectively extending in the A, B, and C directions 508, 509, 510. The rails 518 can be considered as a plurality of unit rail sections that runs between uninterrupted between junctions with other unit rail sections. Accordingly, in a hexagonal grid, each unit rail section has a length of one side of a hexagonal bin 512, which is half the length of a diagonal running between opposite corners of the hexagonal bin 512 and forms an internal angle of 60 degrees with adjacent unit rail sections. At the end of each unit rail section the unit rail section is connected to adjacent unit rail sections to create a continuous track between unit rail sections. The rail system or network 516 is supported by the vertical frame members 504 and the unit rail sections is connected at each vertex where unit rail sections meet. The connections between adjacent unit rail sections and/or between unit rail sections and the vertical frame members 504 may be using bolts and nuts, screws, welding, interlocking parts, or any other connection means. The grid elements (e.g. unit rail sections, vertical frame members, and connectors therebetween) may be fabricated of any appropriate material; for example, the frame members may be formed of extruded aluminium. The rails 518 can be any appropriate type for permitting travel of the robots thereon including (not shown) groove-type rails for receiving vehicle wheels, or protrusion-type rails for engaging wheel recesses. Each rail may comprise a single track or multiple parallel tracks. The robots access the bins 512 via access openings 524 above the columns 502 and formed between boundary rails following the boundaries of bins 512.

Some columns 502 may be used for alternative purposes than bin storage in the same way as described above for rectilinear automated storage and retrieval systems with reference to Fig. 1. For example, hexagonal systems can also include port columns, access columns, ports, lifts, conveyors, transport vehicles, etc. Although the rail system 516 shown in Fig. 5B is on an even level, in some examples the rail system varies in elevation between different parts of the storage structure 515.

Each unit rail section of the rail system 516 can be designated as a boundary rail or a crossing rail. A boundary rail is any part of the rail system 516 that runs above a boundary between two adjacent hexagonal bins 512 (which maybe a gap between vertical columns 502). Therefore the boundary rails create a network of rails that define a plurality of hexagonal access openings 524 through which the bins 512 can be raised or lowered. A crossing rails is any part of the rail system 516 that runs across a hexagonal access opening 524, i.e., across a diagonal of a hexagonal bin 512. Each reference number for the rail sets 518a, 518b, and 518c in Fig. 5B indicates one unit rail section that is a boundary rail and another that is a crossing rail.

The presence of crossing rails prevents hexagonal bins 512 from being raised or lowered through the hexagonal access openings. Therefore the crossing rails must be temporarily removed before a hexagonal bin 512 can be transported through the rail system 516. In some examples, this is done by having a releasable connection at each junction between a boundary rail and a crossing rail, e.g. mechanical connectors such as hooks, clips, slots, etc., or combinations thereof. In some examples, the rails are not directly connected to each other but there is an alignment guide that extends from the boundary rails that forces the crossing rail into the correct alignment. In particular, the correct alignment is such that the crossing rail aligns with the boundary rail opposite the junction when the crossing rail positioned next to the junction (such as when being replaced after the column below the crossing rail has been accessed). This provides a continuous line of rail and track for a vehicle to travel along. In some examples, the crossing rails that cross a particular hexagonal access opening 524 are each mounted on a cover (not shown) so that all the crossing rails are removed and replaced as one unit. The cover may sit on a ledge running along a lower edge of the boundary rails defining the hexagonal access opening. The cover may comprise one or more handle (such as a protrusion, aperture, recess, etc., or combinations thereof) suitable for being gripped by a gripping device of a container-handling vehicle in the same manner as a bin 512. This allows the same mechanism for removing and replacing bins 512, according to any of the examples described herein, to be used for removing and replacing the covers with crossing rails thereon.

In some examples, a rail system may comprise only boundary rails, such that the hexagonal access openings 524 are not blocked by any rails. This interrupts the colinear sets of tracks running in each direction A 508, B 509, and C 510. Accordingly, container-handling vehicles that are not constrained by the direction of the rails, e.g. continuous track vehicles, are particularly useful because they can traverse the storage structure supported by the rails without needing to travel along the rails.

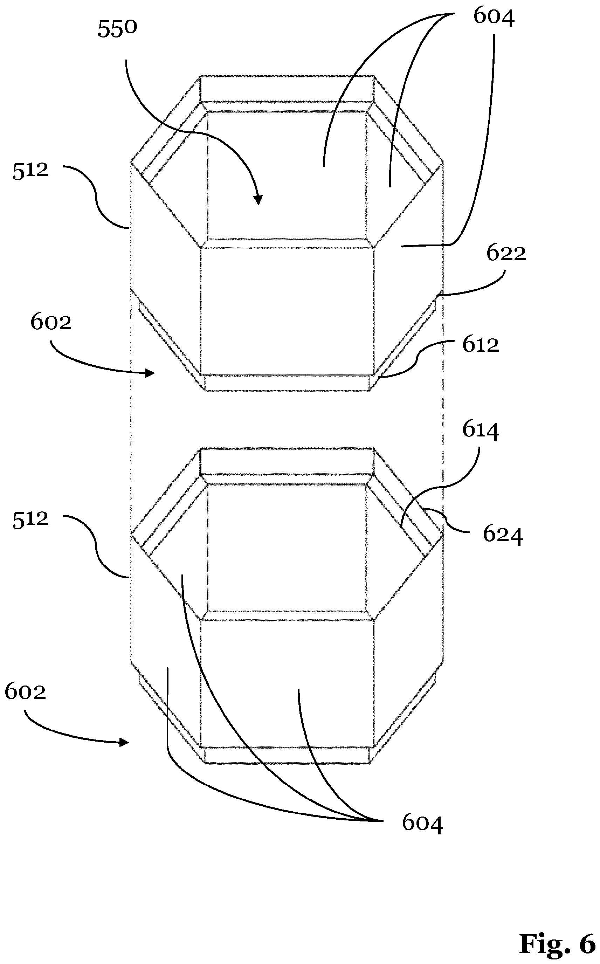

With reference to Fig. 6, the hexagonal bins 512 that are stacked to form the storage structure 515 as described above with reference to Fig. 5 comprise a hexagonal base 602 and six walls 604 perpendicular to the hexagonal base 602. In this way, the hexagonal bins 512 have a hexagonal shape, e.g. have a hexagonal cross-section in a plane parallel to the hexagonal base or have a hexagonal footprint. Similarly, the hexagonal bins 512 may have a 3D form of a hexagonal prism (or substantially hexagonal prism) and define a hexagonal prism storage cavity 550 in which to store items. In some examples, the hexagonal shape is a regular hexagon, i.e. having sides of equal length and equal angles between sides.

In some examples, each hexagonal base 602 of the hexagonal bins 512 and the walls 604 have complementary profiles so that they interlock when stacked in a vertical column. In some examples, with reference to Fig. 6, the hexagonal base 602 comprises a stand 612 protruding away from the storage cavity and having a smaller hexagonal shape than the rest of the hexagonal base 602, so that the hexagonal base 602 comprises an overhang 622. At the top of the hexagonal bins 512, i.e., at the sides of the walls 604 opposite the base 602, the walls 604 comprise a ledge 614 protruding inwards away from the walls 604 and into the storage cavity. Accordingly, the walls 604 comprise a lip 624 at the top of the walls 604 above the ledge 614. When stacked together, the hexagonal base 602 of a first hexagonal bin 512 slides onto a second hexagonal bin 512 so that the stand 612 of the first hexagonal bin sits on the ledge 614 of the second hexagonal bin and the overhang 622 of the first hexagonal bin sits on the lip 624 of the second hexagonal bin 512. The two stacked bins 512 are interlocked, meaning that the bins 512 cannot slide laterally and remain stacked vertically. Likewise further hexagonal bins 512 having the same complementary profiles of hexagonal base 602 and walls 604 can be stacked above and below to increase the stack size. In other examples, different complementary profiles are used, e.g. having a protrusion on the walls 604 and a recess on the hexagonal base 602, tongue and groove joints, or other interlocking joints. In general, complementary profiles will have complementary shapes as viewed from a vertical cross-section perpendicular to the walls 604.

The hexagonal bins 512 of an automated storage and retrieval system have a size, shape and dimensions that correspond to the other components of the system. For example, the hexagonal shape of the bins will be smaller than the hexagonal access openings 524 of a rail system 516, to allow the bins to pass therethrough, but generally as large as possible without hindering passage through the rail system. When using internal cavity robots 704, as described below, the hexagonal bins 512 will be smaller than the internal cavity 825 of the robot.

In some examples, the hexagonal bins 512 comprise guide slots (not shown) for receiving guide rods of a gripping device. In some examples, the hexagonal bins 512 comprise handles (not shown), such as protrusions, apertures, recesses, etc., or combinations thereof, for receiving grippers of a gripping device to be raised and lowered thereby. This may be implemented in the same way as in rectilinear storage and retrieval systems.

It will be appreciated that the hexagonal base 602 is hexagonal because it has a substantially hexagonal shape but may comprise a component having a different shape. For example, a stand, feet, or other structure extending away from the storage cavity may have a shape other than hexagonal but inscribed by the hexagonal shape of the hexagonal base. The hexagonal base 602 still defines the footprint and/or cross-section of the hexagonal bin 512 as hexagonal, as well as its ability to tesselate with other hexagonal bins 512, its strength, and its high ratio of area/volume to circumference.

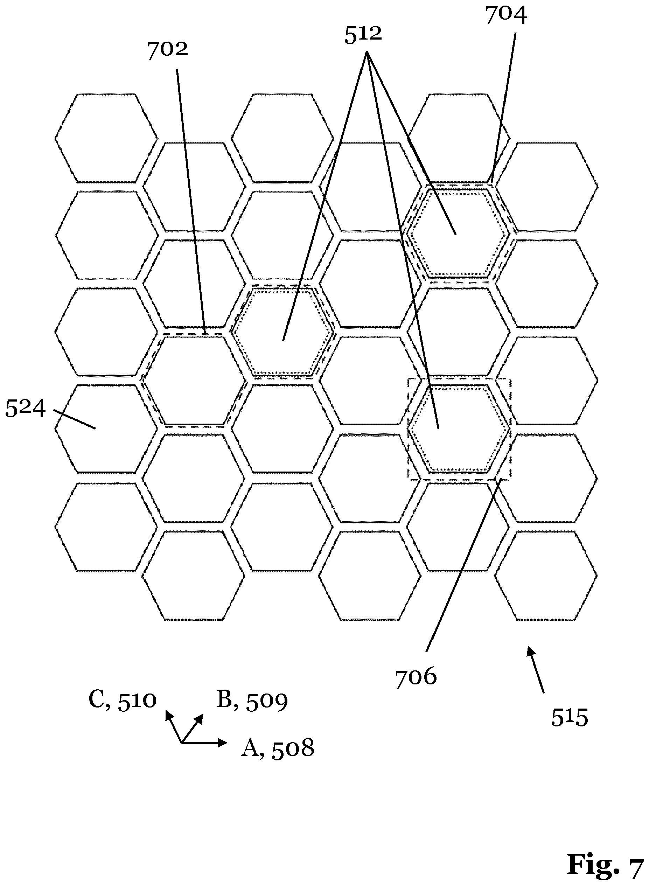

With reference to Fig. 7, the 2D plane (in which directions A 508, B 509, and C 510 lie) in which the rail system 516 extends can be seen in more detail, together with robots 702, 704 and 706 of different types. The rail system is not shown in Fig. 7 for simplicity.

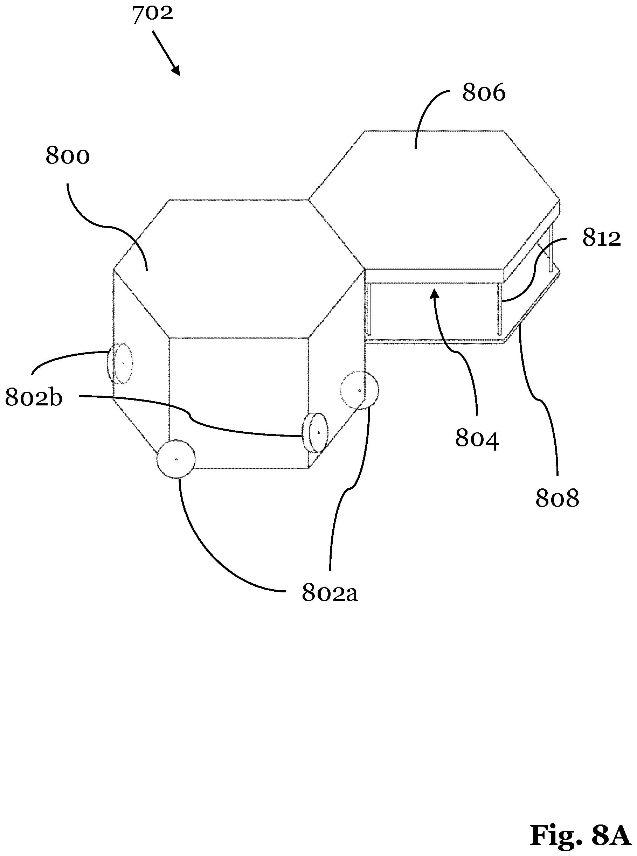

A first, 'cantilever' type of robot 702 is shown in more detail in Fig. 8A and includes a body 800, a plurality of wheels 802 and a lifting device 804. The body 800 contains operational equipment (not shown) for the robot 802 including drive, power, and control systems. The body is hexagonal, i.e., corresponds to the shape of the access openings of the rails 518, which reduces the number of blocked routes on the rails 518 around the robot 702. A first set of wheels 802a permit movement of the robot 802 in one of the A, B, or C directions, and a second set of wheels 802b permit movement in another of the A, B, or C directions, in each case along the respective rails or tracks 518 parallel to that direction. One or both sets of wheels can be raised or lowered to permit selective engagement of the rails for movement in the desired direction. The lifting device 804 includes a cantilever element 806 extending in the 2D plane from the top of the body 800, and a gripping device 808, which is raisable and lowerable from the cantilever element 806 using bands 812. The gripping device 808 is configured to grip or engage a bin 512; for example, by gripping a part of the bin 512, or by passively or actively engaging a suitably configured part of the bin 512. In some examples, the gripping device 808 may have any of the features or properties of a gripping devices used for robots in rectilinear systems, such as the gripping devices 308 as described above with reference to Fig. 3D.

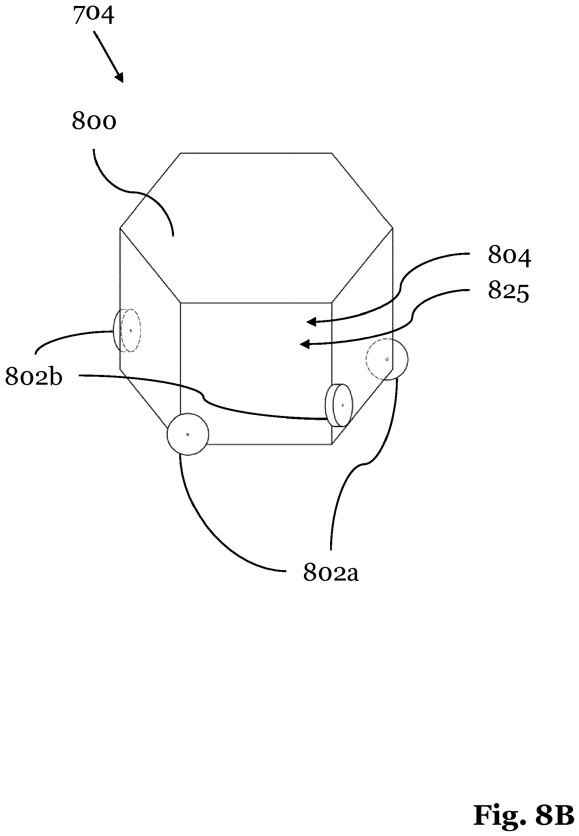

A second, 'internal cavity' type of robot 704 is shown in more detail in Fig. 8B and includes, as an alternative to the cantilevered lifting system, an internal cavity 825 within the body 800 and in which the lifting device 804 including a gripping device (not shown) is located. In this example, the body 800 includes the robot's operational equipment and a storage space for one or more bins 512, for use, for example, while transporting the bin 512. The internal cavity robot 704 also comprises a plurality of wheels 802 including a first set of wheels 802a and a second set of wheels 802b for moving the robot in two of the A, B, or C directions. The body 800 is hexagonal as described above for the cantilever robot 702 and the internal cavity 825 is hexagonal and having a shape and dimensions for receiving a hexagonal bin 512 of the storage structure 515.

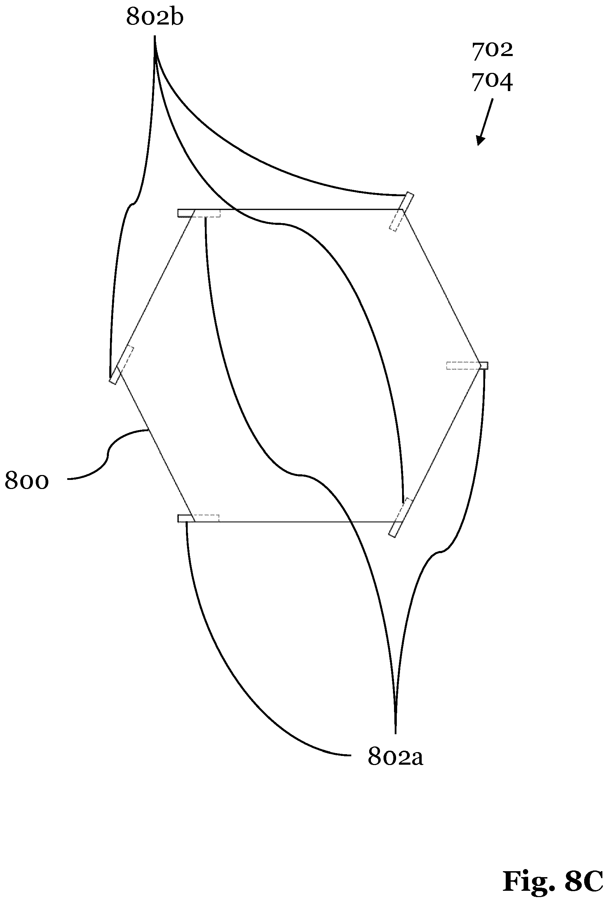

With reference to Fig. 8C, in either cantilever type or internal cavity type robots 702, 704, as described above, the second set of wheels 802b is arranged at 120 degrees to the first set of wheels 802a, to allow the robot 702, 704 to move in two of the directions A, B, and C on the wheels 802. The first and second set of wheels 802a, 802b shown in Fig. 8A and 8B may be configured to be independently lowered into engagement with the rails (and conversely raised out of engagement with the rails) to allow the robot 702, 704 to move in two of the A, B, or C directions across the arrangement of rails shown in Fig. 5B. The first set of wheels 802a comprises three wheels arranged on three non-adjacent corners of the body 800 and oriented parallel to a first direction. The second set of wheels 802b comprises three wheels arranged on the other three non-adjacent corners of the body 800 and oriented parallel to a second direction. Travelling in two out of three of directions A, B, and C allows the robot to travel between any two positions on rails 518 across the 2D plane. Therefore two sets of wheels are enough for some implementations. In other implementations, the robot can travel in any of the three directions A, B, C across the 2D plane. For example, there may be a third and/or fourth set of wheels, also independently raisable and lowerable, that are orientated in the third direction to permit movement in the direction not already provided by the first and second set of wheels. In some examples, the first and/or second set of wheels (and optionally additional sets of wheels) are configured to rotate in 120 degree increments when in a raised position, i.e., when not engaging the rails 518. As such, the robot 702, 704 can travel in a first direction using the first set of wheels 802a and, during travel, the second set of wheels 802b rotates to orient along the direction in which the robot 702, 704 next needs to travel. After the second set of wheels 802b has been lowered and the first set of wheels 802a has been raised, the robot 702, 704 then travels using the second set of wheels 802b and the first set of wheels 802a can either be kept in the original direction or rotate 120 degrees according to the next direction of travel required for the robot. The rotation of the wheels can be done by each wheel being connected to the body 800 using a bridge connecting to the axel of the wheel on either side, wherein the bridge is mounted onto the body 800 by a rotating stage. The rotation of the wheels may be actuated by a motor controlled by the operational equipment of the robot 702, 704. The wheels have a mechanical lock configured to fix the direction of each wheel in one of the three directions A, B, and C and to release before being rotated. The wheels may be inset from the hexagonal shape of the body 800 in recesses, or may protrude from the body 800.

With reference to Fig. 7, a third, 'crane' type of robot 706 is suspended above the storage structure 515. This avoids the need to traverse the storage structure 515 by a rail system 516 or otherwise supported by the storage structure itself. Therefore the shape of the robot 706 can be determined by its own transport mechanism. For example, a crane robots 706 may traverse the storage structure 515 by being suspended from a gantry comprising a rectilinear grid of rails (not shown), e.g. monorails or tracks and wheels analogous to the rectilinear rails system 316 described above with reference to Fig. 1 to Fig. 3, in which case a rectangular robot shape may be suitable. Crane robots 706 may comprise just a gripping device and a lifting device that can be moved over the storage structure 515.

The gripping device used for any of the types of robot 702, 704, 706 described herein may have any of the features or properties of a gripping devices used for robots in rectilinear systems, such as the gripping devices 308 as described above with reference to Fig. 3D. The gripping device may be hexagonal and having a shape and dimensions corresponding to the hexagonal bins 512, e.g., for alignment of grippers with handles on the bins 512. For examples having a rail system, the gripping device has a shape and dimensions that permit it to move through hexagonal access opening 524 of a rail system 516.

The control and monitoring system and the operation of the automated storage and retrieval system of the hexagonal system described with reference to Fig. 5 to Fig. 9 is the same as the control and monitoring system and the operation of the automated storage and retrieval system as described above for a rectilinear system with reference to Fig. 1 to 4.

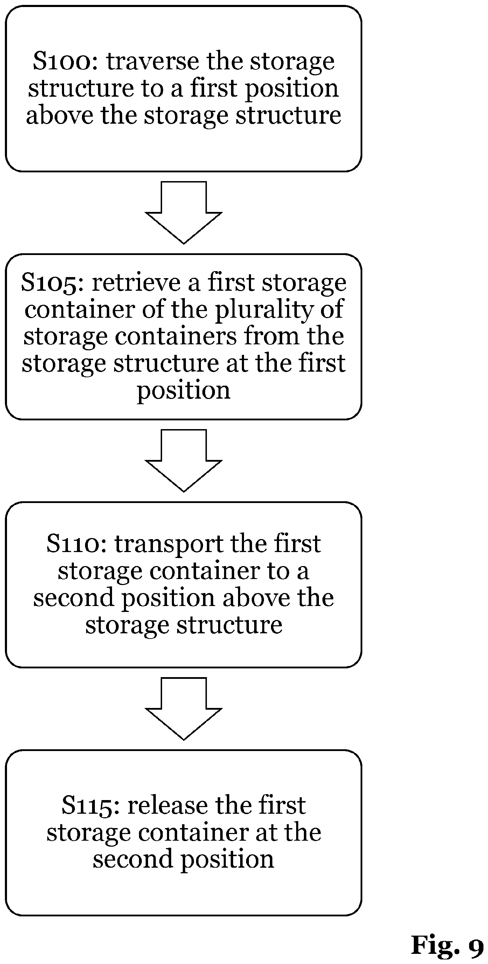

With reference to Fig. 9, a method of handling storage containers in an automated storage and retrieval system as described herein, i.e., handling storage containers having a hexagonal base, comprises controlling a first container-handling vehicle to traverse S100 the storage structure 515 to a first position above the storage structure. The vehicle is then controlled to S105 retrieve a first storage container 512 of the plurality of storage containers from the storage structure 515 at the first position and transport S110 the first storage container to a second position above the storage structure. The vehicle is then controlled to release S115 the first storage container at the second position.

In examples having a rail system 516, the traversing S100 and transporting S110 comprise travelling along one or more rails and may comprise changing direction from one of the directions A, B, or C to a different direction A, B, or C. The change of direction may comprise raising a first set of wheels oriented in a first direction from the rails and lowering a second set of wheels orientated in a second direction onto the rails. Compared to a rectilinear rail system, a hexagonal rail system provides more direct routes between two arbitrary locations on the rail system and provides more degrees of freedom for planning routes to avoid interfering with routes of other vehicles using the rail system.

The retrieving S105 may comprise lowering a gripping device of the vehicle to the storage container to be retrieved and engaging the storage container with the gripping device before raising the gripping device and storage container therewith. Likewise, the releasing S115 may comprise lowering the gripping device and the gripped storage container before detaching the storage container from the gripping device and raising the gripping device to the body of the vehicle.

In examples having a rail system 516 that includes crossing rails, the method comprises removing crossing rails that cross the hexagonal access opening above the storage container to be retrieved. In some examples, this is done using the gripping device, wherein the crossing rails are raised out of the rail system and are stacked on another nearby hexagonal access opening, or stored on the vehicle, or raised by a second vehicle working in cooperation with the first vehicle, until after the storage container has been raised above the rail system and the crossing rails can be replaced. The same process can be reversed to replace the crossing rails into the rail system so that the crossing rails connect securely and in correct alignment with the neighbouring rails.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. An automated storage and retrieval system comprising:
a storage structure comprising a plurality of vertical columns of stacked storage containers, wherein each the storage containers each comprise a hexagonal base;
a plurality of container-handling vehicles configured to store and retrieve the storage containers into and out of the storage structure.

2. The automated storage and retrieval system of claim 1, comprising a framework, wherein the framework comprises:
a plurality of vertical frame members; and
a rail system arranged across the tops of the vertical frame members, wherein the rail system comprises rails arranged to guide movement of the container-handling vehicles across the top of the framework, wherein the rails include boundary rails that divide the rail system into a plurality of hexagonal access openings for lifting and lowering the storage containers through the rail system.

3. The automated storage and retrieval system of claim 2, wherein the rails of the rail system include crossing rails that cross the access openings and connect opposite vertices of the hexagonal access openings, wherein the crossing rails are configured to be removable and replaceable.

4. The automated storage and retrieval system of claim 3, wherein the rail system comprises a cover for each hexagonal access opening, wherein the crossing rails that cross a hexagonal access opening are mounted on the cover for that hexagonal access opening.

5. The automated storage and retrieval system of claim 3 or 4, wherein the plurality of container-handling vehicles are arranged to remove and replace crossing rails that cross a hexagonal access opening.

6. The automated storage and retrieval system of any of claims 2 to 5, wherein container-handling vehicles of the plurality of container-handling vehicles comprise:
a body;
one or more sets of wheels for traversing the rail system; and
a gripping device configured to be raised or lowered by a lifting device, wherein the gripping device is configured to engage a first storage container and thereby raise or lower the first storage container through the rail system.

7. The automated storage and retrieval system of claim 6, wherein the container-handling vehicles include:
a cantilever vehicle comprising a cantilever element extending substantially parallel to the rail system, wherein the gripping device of the cantilever vehicle is configured to be raised or lowered from the cantilever element, wherein the body or the cantilever element is hexagonal; and/or
an internal-cavity vehicle comprising an internal cavity within the body, wherein the gripping device of the internal-cavity vehicle is configured to be raised or lowered from the internal cavity, wherein the internal cavity is hexagonal.

8. The automated storage and retrieval system of claim 6 or 7, wherein the one or more sets of wheels includes at least two sets of wheels, wherein each set of wheels is configured to be independently raised and lowered into and out of engagement with the rails to allow the container-handling vehicles to move across the rail system.

9. The automated storage and retrieval system of any of claims 6 to 8, wherein a respective acute angle between each of a first direction, a second direction, and a third direction is 120 degrees, wherein either:
the one or more sets of wheels comprises three sets of wheels, comprising:
a first set of wheels is oriented parallel to the first direction;
a second set of wheels is oriented parallel to the second direction; and
a third set of wheels is oriented parallel to the third direction; or each set of wheels is configured to rotate between and lock into:
a first position aligned parallel to the first direction;
a second position aligned parallel to the second direction; and
a third position aligned parallel to the third direction.

10. The automated storage and retrieval system of any preceding claim, the system comprising a gantry above the storage structure, wherein the plurality of container-handling vehicles include crane vehicles suspended by the gantry, wherein the crane vehicles are configured to move under the gantry, wherein the crane vehicles comprise a gripping device configured to be raised or lowered by a lifting device, wherein the gripping device is configured to engage a first storage container and thereby raise or lower the first storage container out of or into the storage structure.

11. A container-handling vehicle for an automated storage and retrieval system, the vehicle comprising:
a body;
one or more sets of wheels for traversing a rail system of the automated storage and retrieval system; and
a gripping device configured to be raised or lowered by a lifting device, wherein the gripping device is configured to engage a first storage container and thereby raise or lower the first storage container through the rail system,
wherein the vehicle comprises either:
a cantilever element, wherein the gripping device is configured to be raised or lowered from the cantilever element, wherein the body or the cantilever element is hexagonal; or
an internal cavity within the body, wherein the gripping device is configured to be raised or lowered from the internal cavity, wherein the internal cavity is hexagonal.

12. A plurality of storage containers for an automated storage and retrieval system, wherein the plurality of storage containers is stackable in a vertical column, wherein each storage container comprises a hexagonal base and six walls perpendicular to the hexagonal base to define a storage space, wherein the hexagonal bases and the walls of the storage containers have complementary profiles so that the hexagonal bases and walls interlock when stacked in the vertical column.

13. A method of handling storage containers in an automated storage and retrieval system according to any of claims 1 to 10, the method comprising controlling a first container-handling vehicle of the plurality of container-handling vehicles to:
traverse the storage structure to a first position above the storage structure;
retrieve a first storage container of the plurality of storage containers from the storage structure at the first position;
transport the first storage container to a second position above the storage structure;
release the first storage container at the second position.

14. A method of handling storage containers according to claim 13 in an automated storage and retrieval system according to any of claims 3 to 5, or claims 6 to 9 when dependent on claim 3, the method comprising controlling a first container-handling vehicle of the plurality of container-handling vehicles to:
before retrieving the first storage container, remove crossing rails that cross a hexagonal access opening at the first position; and
after retrieving the first storage container, replace crossing rails that cross the hexagonal access opening at the first position.

15. A computer-readable medium comprising instructions which, when executed by a processor of a device, cause the device to perform the method of claim 13 or 14.
